## Europäisches Patentamt

## European Patent Office

## Office européen des brevets

(19)

(11) Publication number: **0 149 272**
**B1**

(12) **EUROPEAN PATENT SPECIFICATION**

(45) Date of publication of patent specification: **23.09.87**

(51) Int. Cl.⁴: **B 62 K 25/00,** B 62 D 61/08, B 62 K 5/04

(21) Application number: **84201827.7**

(22) Date of filing: **22.10.82**

(80) Publication number of the earlier application in accordance with Art. 76 EPC: **0 078 639**

(54) Light vehicle front suspensions.

(30) Priority: **29.10.81 JP 174340/81**

(43) Date of publication of application:
**24.07.85 Bulletin 85/30**

(45) Publication of the grant of the patent:
**23.09.87 Bulletin 87/39**

(84) Designated Contracting States:
**DE FR GB IT**

(56) References cited:
**FR-A- 985 372**
**GB-A- 990 223**
**US-A-2 818 127**

(73) Proprietor: **HONDA GIKEN KOGYO KABUSHIKI KAISHA**
**27-8, Jingumae, 6-chome**
**Shibuya-ku, Tokyo 150 (JP)**

(72) Inventor: **Satoh, Kazuo**
**3-23-3, Higashi-Mizuhodai**
**Fujimi-shi Saitama (JP)**
Inventor: **Kawasaki, Katsuyoshi**
**9-9-10, Kamirenjaku**
**Mitaka-shi Tokyo (JP)**

(74) Representative: **MacFarlane, John Anthony Christopher et al**
**HASELTINE LAKE & Co. Hazlitt House**
**28 Southampton Buildings Chancery Lane**
**London WC2A 1AT (GB)**

Courier Press, Leamington Spa, England.

## Description

This invention relates to the front suspensions of light three-wheeled vehicles. Hereinafter terms such as right side, left side, front and rear will be used with reference to the intended direction of forward running of the vehicle being referred to.

By way of general explanation there will first be discussed two-wheeled vehicles. Thus, in a motorcycle equipped with an engine, it is known to provide a front suspension in which the single front wheel is supported on one side only by a single supporting member, disposed either on the right side or on the left side of the front wheel, the use of only a single such member serving to minimise vehicle weight, simplify assembling work and improve accessibility as compared with another commonly used front suspension in which the front wheel is supported by a front fork on both the right and left sides of the wheel. In the known single support front suspension the front wheel supporting member is offset to the right or left with respect to the centre line of the vehicle passing through the front and rear wheels, and it is further known, see French Patent Specification No. 985,372 that the front wheel also is offset to one side or the other with respect to the longitudinal centre line of the vehicle. However, by offsetting the front wheel support member the structure of the steering mechanism including the supporting member becomes unbalanced in weight and hence is liable to turn in one direction, since the structure of the steering mechanism is pivotally joined to the body structure including the body frame, and in order to ensure rectilinear running capability of the motorcycle, the front wheel supporting member is disposed at a caster angle. The combined effect of the caster angle and the turning tendency of the structure of the steering mechanism as just discussed causes a torsional force to act on the body structure. Consequently, the entire vehicle is subject to an inclining action. Accordingly, in a motorcycle employing a single support type front suspension and offset components as just described, the dislocation of the centre of gravity of the entire motorcycle from the centre line of the entire motorcycle resulting from the offset centre of gravity of the structure of the steering mechanism is corrected, in running, by an inclination of the entire motorcycle in the balancing direction. That is, the motorcycle is run in an inclined position to maintain dynamic balance. As an alternative, in another motorcycle, the centre of gravity of the body is dislocated intentionally taking the unbalanced weight of the structure of the steering mechanism into consideration.

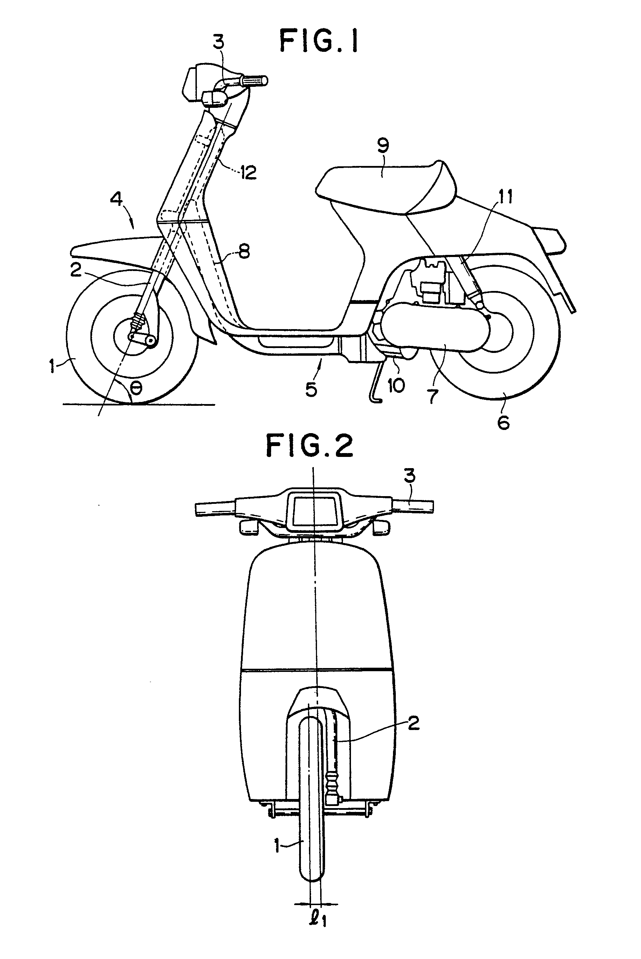

By way of more detailed general explanation reference will now be made to Figures 1 and 2 of the accompanying drawings, Figure 1 being a side view of a two-wheeled motor scooter, and Figure 2 being a front view of this motor scooter. In the motor scooter of these two Figures, a front wheel 1 is pivotally supported at the lower end of a supporting member 2 having a shock absorber mechanism. The supporting member 2 is disposed on one side of the front wheel 1 as illustrated in Figure 2 so that the front wheel 1 is supported by the supporting member 2 acting as a single support. As shown in Figure 1, the supporting member 2 is inclined in a clockwise direction from the vertical to form a caster angle θ with respect to a horizontal line as usual in motorcycles. A handlebar 3 is attached on top of the supporting member 2. The supporting member 2 and the handle-bar 3 consitute a steering structure 4. A body structure 5 having a rear wheel 6 comprises a power unit 7, a body frame 8 and a seat 9. The rear wheel 6 is pivotally supported at the rear end of the power unit 7 incorporating a transmission case containing a chain and other transmission members for transmitting the engine power to the rear wheel 6. The power unit 7 is joined to and suspended from the body frame 8 by means of a connecting member 10 and a rear shock absorber 11. A head pipe 12 is fixedly provided on the front end of the body frame 8 at an angle the same as the caster angle. The supporting member 2 is inserted rotatably through the head pipe 12 so that the steering structure 4 is pivotally supported by the body structure 5 for steering motion.

The unfavourable effects discussed above, in a light two-wheeled motor vehicle, of having the front wheel supported with an single supporting member either on the right side or on the left side of the wheel, occur also in a light three-wheeled motor vehicle having such a front suspension. As an example of such a light three-wheeled motor vehicle, US—A—2 818 127 discloses a front suspension of a light motor vehicle having a single front wheel 10 supported on one side only thereof by a supporting member 28 disposed either on the right side or on the left side of the front wheel 10 in which:

(a) the front wheel 10 is offset either on the right side or the left side with respect to the longitudinal center line of the vehicle; and

(b) the light motor vehicle is a three-wheeled vehicle having a front body structure 28 including the front wheel 10 and a rear body structure incuding a right rear wheel 12 and a left rear wheel 14, the front and rear body structures 28 and 22, 23 being joined for relative swinging motion within a horizontal plane.

According to the present invention there is provided a front suspension of a light motor vehicle having a single front wheel supported on one side only thereof by a supporting member disposed either on the right side or on the left side of the front wheel, in which:

(a) the front wheel is offset either on the right side or on the left side with respect to the longitudinal centre line of the vehicle; and

(b) the light motor vehicle is a three-wheeled vehicle having a front body structure including the front wheel and a rear body structure including a right rear wheel and a left rear wheel, the front and rear body structures being joined for relative swinging motion within a horizontal plane;

characterised in that:

(c) the rear wheels are driving wheels differing from each other in driving force; and

(d) with respect to the centre line of the vehicle, the front wheel is supported by the supporting member on the side opposite the side of the rear wheel having a greater driving force. In this suspension the unfavourable effects discussed can be minimised. In particular the present front suspension enables substantial avoidance of an inclined running position of the vehicle notwithstanding the unbalanced weight resulting from the provision of the single support member, and rectilinear running of the vehicle can be obtained.

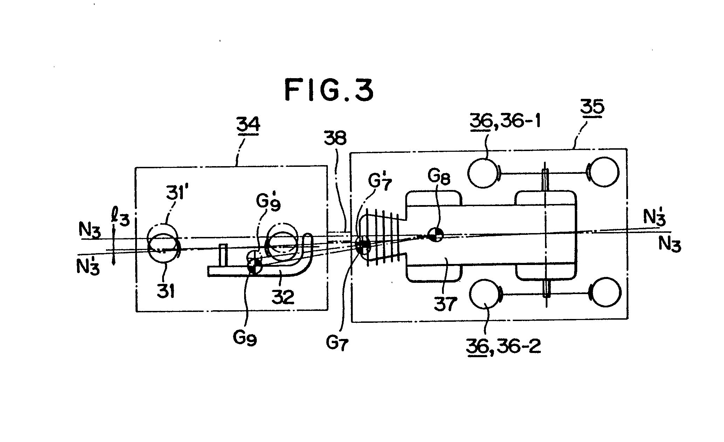

For a better understanding of the invention, and to show how the same may be carried into effect, reference will now be made, by way of example, to Figure 3 of the accompanying drawings which is a schematic plan view of a three-wheeled vehicle.

The vehicle of Figure 3 is similar to the two-wheeled vehicle of Figures 1 and 2 described above in that it has steering structure 34 and a body structure 35 which includes a power unit 37, a body frame and a seat. As this vehicle is a three-wheeled vehicle, the power unit 37 drives right and left rear wheels 36.

The front body structure 34 includes the single front wheel 31.

In this vehicle, the front body structure 34 and the rear body structure 35 are joined relatively swingably within a horizontal plane by a swing joint 38. In practice this swing joint 38 consists of an outer tube and an inner tube rotatable fitted in the outer tube with the axial direction of the inner and outer tubes inclined to a horizontal plane at substantially the same angle as the caster angle $\theta$ (see above), the front part being at a position higher than the position of the rear part, which secures rectilinear running of the vehicle. The front wheel 31 and a front wheel supporting member 32 are mounted rotatably on the front body structure 34 for steering motion. The front wheel 31 is supported on one single side thereof by the supporting member 32.

The centre of gravity $G_8$ of the rear body structure 35 lies on the centre line $N_3$—$N_3$ of the vehicle.

In a set-up illustrated in chain-dot lines, in which the front wheel is at a position 31' not offset from the vehicle centre line $N_3$—$N_3$ and centrally disposed relative to the two rear wheels 36-1, 36-2, the centre line $N_3$—$N_3$ of the vehicle passes through the central part of the front wheel. In this setup the front body structure 34 has a tendency to turn about the swing joint 38 due to the unbalanced weight thereof as in the case of two-wheeled vehicles. This turning tendency and the angle of inclination incorporated in the swing joint 38 cause the front body structure 34 to apply a leftward torsional force to the rear body structure 35. Consequently, the entire vehicle tends to incline to the left side, and therefore the vehicle runs diagonally leftward in an inclined position.

In accordance with the present invention, in order to prevent diagonal running of the vehicle, the front wheel 31 is offset from the centre line $N_3$—$N_3$ of the vehicle on the side of the supporting member 32 by a distance $l_3$. The centre of gravity of the front body structure 34 is thereby moved from chain-dot line position $G'_9$ to full line position $G_9$ so that the centre of gravity of the entire vehicle is moved from the chain-dot line position $G'_7$ to full line position $G_7$ deviated from the vehicle centre line $N_3$—$N_3$ to the same side thereof as the offset wheel. As a result inclination of the vehicle is reduced and an approximately upright position of the vehicle is obtained, whereby the vehicle is able to run rectilinearly.

The tendency of diagonal running of a three-wheeled vehicle is attributable also to a difference in the driving force between the right rear wheel 36-1 and left rear wheel 36-2.

For example, when the driving force of the right rear wheel 36-1 is greater than that of the left rear wheel 36-2, the rear body structure 35 tends to turn to the left. Consequently, the front body structure 34 joined to the rear body structure 35 by the swing joint 38 tends to turn to the right with respect to the running direction of the vehicle about the swing joint 38 similarly to the turning motion resulting from the turning tendency discussed above. Therefore, the rear body structure 35 tends to be inclined to the right and the three-wheeled vehicle tends to run diagonally to the right during the initial stage of running.

In order to solve such a problem the present invention also provides that the front wheel 31 is offset, as shown in Figure 3, to the left of the centre line $N_3$—$N_3$ of the vehicle, namely, opposite to the right rear wheel 36-1 having a greater driving force, to secure the rectilinear running of the three-wheeled vehicle.

Such offset disposition of the front wheel for maintaining the rectilinear running of a three-wheeled vehicle is applicable also to a three-wheeled vehicle employing a double support system for supporting the front wheel. However, in this case the rightward turning tendency of the front body 34 can be controlled to a lesser extent by the effect of the unbalanced weight of the supporting member 32 resulting from the disposition of the supporting member 32 on the opposite side with respect to the right rear wheel 36-1, namely, on the left side with respect to the centre line of the vehicle, for supporting the front wheel 31 through the single support system, in consequence of which the offset distance $l_3$ of the front wheel 31 can be limited to a lesser extent.

It is apparent from what has been described hereinbefore that, in a three-wheeled vehicle having front and rear body structures joined for relative swinging motion in a horizontal plane, the effect of the unbalanced weight of the steering structure resulting from single support of the single front wheel of the three-wheeled vehicle with a supporting member can be opposed by offsetting the front wheel from the centre line of the vehicle to the same side as the supporting side of the supporting member so that a tendency of the vehicle to run in an inclined condition is minimised and rectilinear running of the vehicle is secured. Rectilinear running of the vehicle is further secured by offsetting the front wheel to the side of the centre line opposite to the rear wheel having the greater driving force. In addition, such improvements can be attained without being accompanied by increase in weight of the component members, such as the supporting member, of the steering structure.

## Claims

1. A front suspension of a light motor vehicle having a single front wheel (31) supported on one side only thereof by a supporting member (32) disposed either on the right side or on the left side of the front wheel (31), in which:

(a) the front wheel (31) is offset either on the right side or on the left side with respect to the longitudinal centre line ($N_3$—$N_3$) of the vehicle; and

(b) the light motor vehicle is a three-wheeled vehicle having a front body structure (34) including the front wheel (31) and a rear body structure (35) including a right rear wheel (36-1) and a left rear wheel (36-2), the front and rear body structures (34 and 35) being joined for relative swinging motion within a horizontal plane;

characterised in that:

(c) the rear wheels (36-1, 36-2) are driving wheels differing from each other in driving force; and

(d) with respect to the centre line ($N_3$—$N_3$) of the vehicle, the front wheel (31) is supported by the supporting member (32) on the side opposite the side of the rear wheel (36-1 or 36-2) having a greater driving force.

2. A front suspension of a light motor vehicle as claimed in claim 1, wherein:

the front wheel (31) is offset to the same side as the front wheel supporting side with respect to the centre line ($N_3$—$N_3$) of the vehicle.

3. A front suspension of a light motor vehicle as claimed in claim 2, wherein:

the rear body structure (35) further includes a power unit (37), a body frame and a seat, and

the centre of gravity ($G_8$) of the rear body structure (35) lies on the centre line ($N_3$—$N_3$).

## Patentansprüche

1. Vorderradaufhängung eines leichten Motorfahrzeugs, welches ein Vorderrad (31) aufweist, das lediglich an einer seiner Seiten durch ein Stützglied (32) abgestützt ist, das entweder an der rechten Seite oder an der linken Seite des Vorderrades (31) vorgesehen ist, wobei

(a) das Vorderrad (31), bezogen auf die Längsmittellinie ($N_3$—$N_3$) des Fahrzeugs, entweder nach der rechten Seite oder nach der linken Seite versetzt ist und

(b) das leichte Motorfahrzeug ein dreirädriges Fahrzeug ist, welches ein das Vorderrad (31) aufweisendes Vordergestell (34) und ein ein rechtes Hinterrad (36-1) und ein linkes Hinterrad (36-2) aufweisendes Hintergestell (35) besitzt und Vordergestell und Hintergestell (34 und 35) für relative Verschwenkung in einer horizontalen Ebene miteinander verbunden sind,

dadurch gekennzeichnet, daß

(c) die Hinterräder (36-1, 36-2) sich in ihrer Antriebskraft unterscheidende Antriebsräder sind und

(d) das Vorderrad (31), bezogen auf die Mittellinie ($N_3$—$N_3$) des Fehrzeugs, vom Stützglied (32) an der dem Hinterrad (36-1 oder 36-2) mit der größeren Antriebskraft gegenüberliegenden Seite abgestützt ist.

2. Vorderradaufhängung eines leichten Motorfahrzeugs nach Anspruch 1, worin das Vorderrad (31), bezogen auf die Mittellinie ($N_3$—$N_3$) des Fehrzeugs, nach der gleichen Seite versetzt ist wie die das Vorderrad abstützende Seite.

3. Vorderrad eines leichten Motorfahrzeugs nach Anspruch 2, worin

das Hintergestell (35) eine Antriebseinheit (37), einen Gestellrahmen und einen Sitz aufweist und

der Schwerpunkt ($G_8$) des Hintergestells (35) in der Mittellinie ($N_3$—$N_3$) liegt.

## Revendications

1. Suspension avant d'un véhicule motorisé léger comportant une unique roue avant (31) portée d'un côté seulement de cette roue, par un élément support (32) disposé soit du côté droit, soit du côté gauche de la roue avant (31), dans lequel:

(a) la roue avant (31) est décalée soit du côté droit, soit du côté gauche par rapport à l'axe longitudinal ($N_3$—$N_3$) du vèhicule; et

(b) le véhicule motorisé léger est un véhicule à trois roues comportant une structure de corps avant (34) incluant la roue avant (31) et une structure de corps arrière (35) incluant une roue arrière droite (36-1) et une roue arrière gauche (36-2), la structure de corps avant et la structure de corps arrière (34 et 35) étant réunies de façon à permettre un mouvement oscillant relatif dans un plan horizontal;

caractérisée en ce que:

(c) les roues arrière (36-1, 36-2) sont des roues motrices différant l'une de l'autre en force motrice; et

(d) par rapport à l'axe ($N_3$—$N_3$) du véhicule, la roue avant (31) est portée par l'élément support (32) du côté opposé à celui où la roue arrière (36-1 ou 36-2) présente la plus grande force motrice.

2. Suspension avant d'un véhicule motorisé léger selon la revendication 1, dans lequel:

la roue avant (31) est décalée du même côté que le côté du support de la roue avant par rapport à l'axe ($N_3$—$N_3$) du véhicule.

3. Suspension avant d'un véhicule motorisé léger selon la revendication 2, dans lequel:

la structure de corps arrière (35) comprend en outre un groupe moteur (37), un châssis et un siège et

le centre de gravité ($G_8$) de la structure de corps arrière (35) se trouve sur l'axe ($N_3$—$N_3$).

# FIG.1

# FIG.2

1

# FIG.3